# FASCICULE DE BREVET EUROPEEN

(11) **EP 2 689 485 B1**
(45) Date de publication et mention de la délivrance du brevet: **30.08.2017**
(21) Numéro de dépôt: 12712340.4
(22) Date de dépôt: 07.03.2012
(51) Int. Cl.: H01M 8/04858, H01M 8/04223, H01M 8/0432, H01M 8/04537, B60L 3/00, B60L 11/18

(54) **PROCÉDÉ DE FONCTIONNEMENT D'UNE PILE A COMBUSTIBLE**
VERFAHREN FÜR DEN BETRIEB EINER BRENNSTOFFZELLE
METHOD FOR OPERATING A FUEL CELL

(30) Priorité: 21.03.2011 FR 1152320
(43) Date de publication de la demande: 29.01.2014
(73) Titulaire: PSA Automobiles SA, 78300 Poissy (FR); Commissariat à l'Énergie Atomique et aux Énergies Alternatives, 75015 Paris (FR)
(72) Inventeur: GLIPA, Xavier, F-78480 Verneuil Sur Seine (FR); RANJARD, Jean Francois, F-78280 Guyancourt (FR); PINTON, Eric, F-38130 Echirolles (FR); POIROT CROUVEZIER, Jean-Philippe, F-38450 Saint Georges de Commiers (FR); BEGOT, Sylvie, F-90330 Chaux (FR); HAREL, Fabien, F-90200 Giromagny (FR); LE CANUT, Jean-Marc, F-90000 Belfort (FR)
(74) Mandataire: Ménès, Catherine
(86) Numéro de dépôt international: PCT/FR2012/050474
(87) Numéro de publication internationale: WO 2012/127147

(56) Documents cités:
- JP-A- 2007 026 933
- US-A1- 2005 238 934
- US-B2- 7 531 253

## Description

La présente invention revendique la priorité de la demande française 1152320 déposée le 21 mars 2011.

La présente invention concerne un procédé de fonctionnement d'une pile à combustible génératrice d'électricité, elle concerne aussi un générateur électrique et un véhicule automobile comportant une pile à combustible mettant en oeuvre ce procédé.

Les piles à combustible sont développées aujourd'hui en particulier pour équiper des véhicules en remplacement des moteurs thermiques, elles permettent en produisant de l'électricité utilisée par une machine électrique de traction, d'obtenir un meilleur rendement énergétique par rapport aux moteurs thermiques.

Les piles à combustible comportent généralement un empilement de cellules élémentaires comprenant deux électrodes séparées par un électrolyte, et deux plaques conductrices qui apportent les réactifs aux électrodes par des canaux internes. Les réactions électrochimiques qui se réalisent au contact des électrodes, génèrent un courant électrique et produisent de l'eau, tout en dégageant une énergie calorifique qui échauffe les différents composants.

Pour fonctionner correctement, les piles à combustible doivent se trouver à une certaine température comprise suivant le type de pile entre 20 et 800°C. La chaleur dégagée par le démarrage des réactions quand la pile est froide, sert d'abord à échauffer les cellules pour les amener à la température de fonctionnement souhaitée.

Pour homogénéiser et réguler la température des cellules, les piles à combustible comportent généralement un système de régulation de température, utilisant un fluide caloporteur mis en circulation par une pompe, venant au contact de ces cellules pour prélever des calories, et les dissiper ensuite dans un échangeur thermique par échange avec l'air ambiant.

Un problème qui se pose dans le cas d'un démarrage de la pile à combustible se trouvant à une température basse qui est inférieure à 0°C, est que l'eau produite par la réaction électrochimique risque de geler tant que cette température se trouve en dessous de ce seuil de 0°C. La pile à combustible ne peut alors plus fonctionner correctement, et risque même d'être endommagée.

Pour remédier à ce problème, un procédé de fonctionnement connu, présenté notamment par le document US-A1-2005/0238934, pilote quand la température est suffisamment basse des créneaux de courant formant des impulsions, comprenant des montées ou descentes très rapides, en partant d'un niveau de courant nul pour arriver à un niveau élevé, de manière à obtenir ponctuellement un bon rapport de puissance thermique générée, comparée à la quantité d'eau produite. Ces impulsions de courant permettent ainsi d'échauffer progressivement les cellules de la pile à combustible.

Toutefois un problème qui se pose avec ce procédé de fonctionnement, est que l'établissement de telles impulsions de courant comprenant un courant nul suivi d'une forte dynamique de l'intensité, provoque un vieillissement accéléré de la pile à combustible, notamment par corrosion du carbone contenu dans ces cellules.

La présente invention a notamment pour but d'éviter ces inconvénients de la technique antérieure et de proposer un procédé de fonctionnement qui provoque un échauffement rapide de la pile à combustible, tout en préservant la durée de vie des cellules.

Elle propose à cet effet un procédé de fonctionnement d'une pile à combustible, mis en oeuvre par un calculateur de contrôle qui pilote le niveau de courant généré par les cellules de la pile, cette pile comprenant un moyen de suivi de la température des cellules, caractérisé en ce qu'il comporte les étapes suivantes lors d'un démarrage de la pile à combustible si la température des cellules est à un niveau suffisamment bas, proche ou inférieur à 0°C, il pilote des successions de cycles de créneaux (40) comprenant pour chaque cycle alternativement un faible courant non nul, puis un créneau de courant comportant des vitesses programmées de montée et de descente de l'intensité du courant.

Par température proche de 0°C, on entend une température ou compte tenu des incertitudes qui peuvent être présentes sur la température des cellules, on estime qu'il y a effectivement un risque de gel. On se fixe ainsi un seuil haut à 3°C.

Un avantage de ce procédé de fonctionnement est que l'on peut obtenir un échauffement rapide avec une faible production d'eau grâce aux créneaux de courant pilotés, ainsi qu'une protection des cellules en évitant un fonctionnement à courant nul et en gérant les transitoires de montée et de descente de ces créneaux.

Le procédé de fonctionnement selon l'invention peut en outre comporter une ou plusieurs des caractéristiques suivantes, qui peuvent être combinées entre elles.

Avantageusement, le faible courant est sensiblement constant.

Avantageusement, le créneau comporte un maintien à une intensité maximum, qui est sensiblement constante.

Avantageusement, l'intensité maximum correspond à une valeur supérieure ou égale à la valeur d'intensité pour laquelle la puissance électrique produite est maximale.

Avantageusement, la vitesse programmée de montée de l'intensité du courant pour le créneau, est comprise entre 0.1 et 10 A/cm2/s, sans que la tension d'une cellule ne chute en dessous de 0.3 V.

Selon un mode de réalisation, la vitesse programmée de descente de l'intensité du courant pour le créneau, donne une descente la plus rapide possible.

Avantageusement, la durée moyenne du créneau de courant, entre le début de la montée en intensité et la fin de la descente de cette intensité, est comprise entre 5 et 50% de la période totale d'un cycle.

Avantageusement, la durée totale d'un cycle, est comprise entre 10 et 200 secondes.

Avantageusement, la pile à combustible mettant un oeuvre le procédé de fonctionnement comportant l'une quelconque des caractéristiques précédentes, comporte un capteur de mesure de tension aux bornes des cellules, et un capteur de mesure d'intensité du courant débité.

L'invention a aussi pour objet un générateur électrique disposant d'une pile à combustible, pilotée par un procédé de fonctionnement comportant l'une quelconque des caractéristiques précédentes.

L'invention a de plus pour objet un véhicule électrique disposant d'une pile à combustible délivrant un courant électrique utilisé pour la traction, cette pile étant pilotée par un procédé de fonctionnement comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma général d'un système comprenant une pile à combustible ;
- la figure 2 est un graphique montrant les évolutions de la tension électrique aux bornes des cellules ainsi que des puissances thermique et électrique générées, en fonction de l'intensité de courant débitée ;
- la figure 3 est un schéma montrant sur un exemple de pile à combustible, en fonction du temps, l'échauffement des cellules avec des impulsions de courant pilotées par un procédé de fonctionnement selon l'art antérieur; et
- la figure 4 présente des créneaux de courant pilotés par un procédé de fonctionnement selon l'invention.

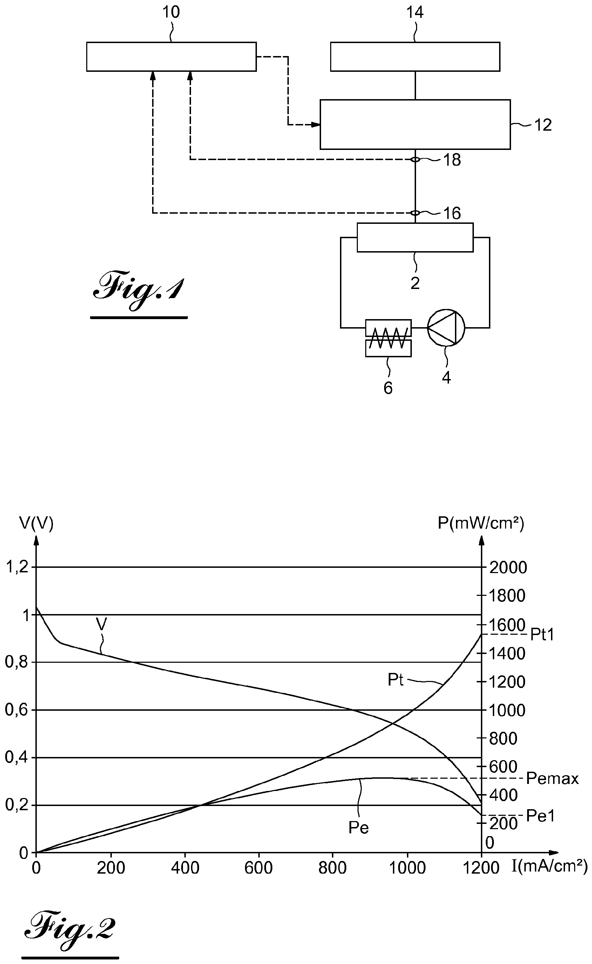

La figure 1 présente une pile à combustible 2 comprenant une série de cellules traversées par un fluide caloporteur d'un système de refroidissement qui assure la gestion thermique de cette pile, comportant une pompe 4 et un échangeur thermique 6 pour refroidir ce fluide par échange des calories avec l'air ambiant.

Un calculateur de contrôle 10 pilote la pile à combustible 2, notamment l'intensité du courant débité dans un convertisseur de puissance 12, qui alimente un dispositif de charge 14 comprenant notamment une machine électrique de traction dans le cas d'une implantation de cette pile dans un véhicule.

Le conducteur électrique entre la pile à combustible 2 et le convertisseur de puissance 12, comporte un capteur de mesure de tension 16 aux bornes des cellules, ainsi qu'un capteur de mesure d'intensité du courant débité 18. Ces informations sont délivrées au calculateur de contrôle 10, qui les utilise pour réaliser le pilotage.

La figure 2 présente en fonction de l'intensité de courant 1 délivré par la pile à combustible 2, exprimée en mA/cm², la tension V aux bornes d'une cellule exprimée en Volts V, ainsi que la puissance électrique Pe et la puissance thermique Pt par unité de surface délivrées par cette cellule, qui sont exprimées en mW/cm².

On constate que l'on obtient d'abord dans une première partie jusqu'à une intensité d'environ 600mA/cm², une croissance régulière de la puissance électrique Pe qui est sensiblement égale à la puissance thermique Pt, puis un plafonnement de la puissance électrique Pe à une valeur maximum Pemax pour une intensité d'environ 900mA/cm², qui s'accompagne d'une croissance plus forte de la puissance thermique Pt, et enfin jusqu'au maximum d'intensité qui est de 1200mA/cm², une baisse de cette puissance électrique Pe qui s'accompagne d'une forte montée de la puissance thermique Pt.

A l'intensité maximale de 1200mA/cm², la puissance thermique Pt1 est de 1500mW/cm² pour une puissance électrique Pe1 de l'ordre de 250 mW/cm², ce qui fait un rapport d'environ 6.

On obtient dans ce dernier cas à la fois une forte génération d'énergie thermique, et une faible production d'énergie électrique, et donc d'eau qui résulte de la réaction électrochimique. C'est le cas de fonctionnement qui donne le meilleur rapport permettant de chauffer le plus rapidement les cellules, tout en minimisant la production d'eau qui risquerait après saturation de l'électrolyte, de geler tant que la température est inférieure à 0°C.

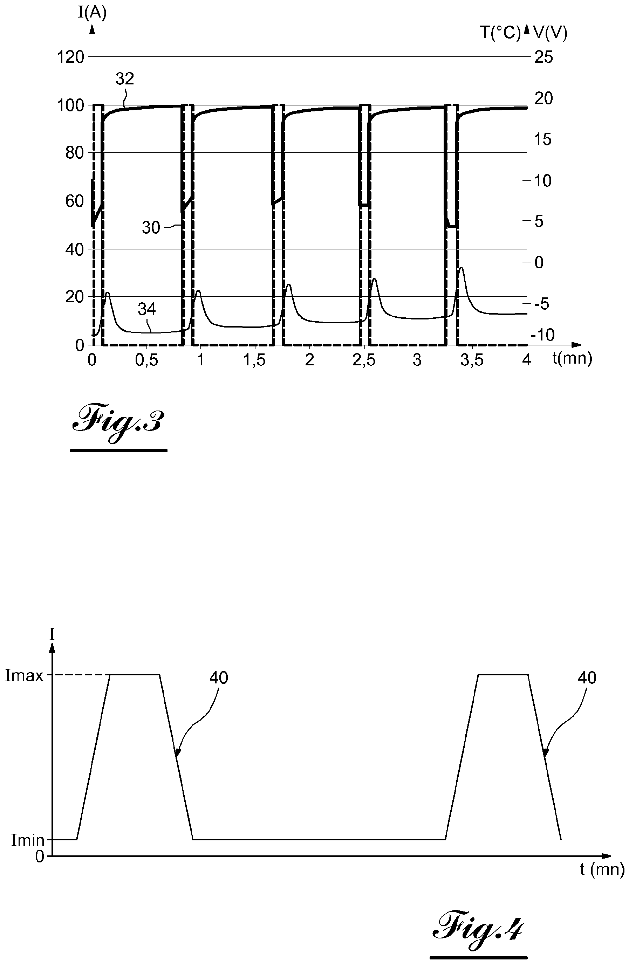

La figure 3 présente en fonction du temps, pour un exemple de pile à combustible comportant un empilement de 19 cellules de 220cm² de surface active, à partir d'une température initiale de -10°C, l'échauffement des cellules avec des impulsions de courant pilotées par un procédé de fonctionnement selon l'art antérieur.

La pile à combustible est refroidie par un fluide caloporteur du type éthylène-glycol, comportant un débit de 5,5L/min.

Le procédé selon l'invention est appliqué dans le cas où une sonde de température non représentée détecte une température des cellules inférieure à 0°C, avec un risque de gel de l'eau produite par la réaction.

Le procédé mis en oeuvre par le calculateur de contrôle 10, pilote alors la pile à combustible 2 pour obtenir des cycles d'impulsions de courant 30, en demandant à partir d'un courant 1 nul, une montée instantanée du courant vers un maximum de 100A, qui est maintenu pendant une durée de 10% du temps de cycle, puis une chute instantanée de cette intensité. Le cycle se reproduit de la même manière toute les 50 secondes.

On constate alors que la tension de l'empilement des cellules présentée par la courbe 32, qui est d'environ 19V quand la pile ne débite pas de courant, chute à moins de 7V pendant l'impulsion de courant.

On constate aussi que la température du fluide caloporteur présentée par la courbe 34, monte fortement d'environ 4°C lors de chaque impulsion de courant, puis redescend à un niveau un peu supérieur à celui du cycle précédent par diffusion de sa température à l'empilement des cellules. Globalement, la température 34 du fluide caloporteur et donc des cellules, a progressé régulièrement d'environ 3°C après cinq cycles d'impulsion de courant.

On obtient ainsi un échauffement rapide de la pile à combustible qui produit peu d'eau, ce qui évite une saturation en eau de l'électrolyte et donc un risque de gel de cette eau, avant que la température des cellules n'atteigne 0 °C.

Toutefois un problème qui se pose avec ce type de pilotage par des impulsions de courant, est que le vieillissement des cellules est plus important à cause du fonctionnement avec un courant nul, et des brutales variations de courant à chaque impulsion.

La figure 4 présente des successions de cycles de créneaux 40 pilotées par le procédé selon l'invention, comprenant pour chaque cycle un faible courant non nul Imin sensiblement constant, puis un créneau de courant 40 comportant une vitesse de montée de l'intensité programmée par ce procédé, ensuite un maintien à l'intensité maximum Imax, et enfin une descente programmée vers l'intensité minimum Imin.

Le faible courant Imin est calculé de manière à ce que la tension moyenne des cellules soit maintenue aux environs de 0.8 V, ce qui représente un compromis entre d'une part une faible densité de courant avec une production d'eau réduite, et d'autre part une limitation du vieillissement due à la corrosion du carbone.

Avantageusement, la vitesse de montée de l'intensité est comprise entre 0.1 et 10 A/cm²/s, sans que la tension d'une cellule ne chute en dessous de 0.3 V. La vitesse programmée de descente de l'intensité, donne de préférence une descente la plus rapide possible.

D'une manière générale, les temps de montée et de descente sont des compromis entre les objectifs de durée de vie de la pile qui demande des temps longs, et de position des points de fonctionnement qui demande des temps brefs pour atteindre ces points désirés rapidement.

La durée d'un créneau entre le début de la montée en intensité et la fin de la descente en intensité, est de préférence comprise entre 5 et 50% de la période totale d'un cycle, qui comporte une durée comprise entre 10 et 200 secondes.

On réalise ainsi un échauffement des cellules qui permet d'optimiser à la fois la vitesse d'échauffement, la limitation de la production d'eau et la durée de vie des cellules.

D'une manière générale, le procédé selon l'invention peut permettre de chauffer la pile à combustible de manière autonome en évitant l'installation d'un chauffage auxiliaire extérieur, ou en réduisant la puissance de ce chauffage auxiliaire si il est installé, et en accélérant la montée en température.

De plus, ce procédé mis en oeuvre par des moyens généralement existants dans la pile à combustible, est économique à réaliser.

## Revendications

1. Procédé de fonctionnement d'une pile à combustible (2), mis en oeuvre par un calculateur de contrôle (10) qui pilote le niveau de courant généré par les cellules de la pile, cette pile comprenant un moyen de suivi de la température des cellules, **caractérisé en ce qu'**il comporte les étapes suivantes lors d'un démarrage de la pile à combustible si la température des cellules est inférieure ou égale à 3°C, il pilote des successions de cycles de créneaux (40) comprenant pour chaque cycle alternativement un faible courant non nul (Imin), puis un créneau (40) de courant comportant des vitesses programmées de montée et de descente de l'intensité du courant.

2. Procédé de fonctionnement suivant la revendication précédente, **caractérisé en ce que** le faible courant (Imin) est constant.

3. Procédé de fonctionnement suivant l'une des revendications précédentes, **caractérisé en ce que** le créneau (40) comporte un maintien à une intensité maximum (Imax), qui est constante.

4. procédé de fonctionnement suivant la revendication 3, **caractérisé en ce que** l'intensité maximum (Imax) correspond à une valeur supérieure ou égale à la valeur d'intensité pour laquelle la puissance électrique (Pe) produite est maximale.

5. Procédé de fonctionnement suivant l'une quelconque des revendications précédentes, **caractérisé en ce que** la vitesse programmée de montée de l'intensité du courant pour le créneau (40), est comprise entre 0.1 et 10 A/cm²/s, sans que la tension d'une cellule ne chute en dessous de 0.3 V.

6. Procédé de fonctionnement suivant l'une quelconque des revendications précédentes, **caractérisé en ce que** la vitesse programmée de descente de l'intensité du courant pour le créneau (40), donne une descente la plus rapide possible.

7. Procédé de fonctionnement suivant l'une quelconque des revendications précédentes, **caractérisé en ce que** la durée moyenne du créneau de courant (40), entre le début de la montée en intensité et la fin de la descente de cette intensité, est comprise entre 5 et 50% de la période totale d'un cycle.

8. Procédé de fonctionnement suivant l'une quelconque des revendications précédentes, **caractérisé en ce que** la durée totale d'un cycle, est comprise entre 10 et 200 secondes.

9. Pile à combustible, mettant un oeuvre un procédé de fonctionnement suivant l'une quelconque des revendications précédentes, **caractérisée en ce qu'**elle comporte un capteur de mesure de tension (16) aux bornes des cellules, et un capteur de mesure d'intensité du courant débité (18).

10. Générateur électrique disposant d'une pile à combustible (2) pilotée par un procédé de fonctionnement **caractérisé en ce que** ce procédé est réalisé suivant l'une quelconque des revendications 1 à 8.

11. Véhicule électrique comprenant une pile à combustible (2) délivrant un courant électrique utilisé pour la traction, **caractérisé en ce que** cette pile à combustible est pilotée par un procédé de fonctionnement réalisé suivant l'une quelconque des revendications 1 à 8.

## Patentansprüche

1. Betriebsverfahren einer Brennstoffzelle (2), das von einem Steuerrechner (10) umgesetzt wird, der den Strompegel steuert, der von den Zellen des Stapels erzeugt wird, wobei diese Brennstoffzelle ein Überwachungsmittel der Temperatur der Zellen umfasst, **dadurch gekennzeichnet, dass** es die folgenden Schritte bei einem Starten der Brennstoffzelle umfasst, falls die Temperatur der Zellen niedriger oder gleich 3 °C ist, es Abfolgen von Anlassimpulszyklen (40) steuert, die für jeden Zyklus abwechselnd einen schwachen Strom nicht gleich null (1min), dann einen Stromimpuls (40), der programmierte Anstiegs- und Abstiegsgeschwindigkeiten der Stromstärke umfasst.

2. Betriebsverfahren nach dem vorhergehenden Anspruch, **dadurch gekennzeichnet, dass** der schwache Strom (1min) konstant ist.

3. Betriebsverfahren nach einem der vorhergehenden Ansprüche, **dadurch gekennzeichnet, dass** der ein Anlassimpuls (40) ein Halten auf einer maximalen Stärke (lmax), die konstant ist, umfasst.

4. Betriebsverfahren nach Anspruch 3, **dadurch gekennzeichnet, dass** die maximale Stärke (lmax) einem Wert über oder gleich dem Stärkenwert entspricht, für den die erzeugte elektrische Leistung (Pe) maximal ist.

5. Betriebsverfahren nach einem der vorhergehenden Ansprüche, **dadurch gekennzeichnet, dass** die programmierte Anstiegsgeschwindigkeit der Stärke des Stroms für den Anlassimpuls (40) zwischen 0,1 und 10 A/cm²/s liegt, ohne dass die Spannung einer Zelle und 0,3 V fällt.

6. Betriebsverfahren nach einem der vorhergehenden Ansprüche, **dadurch gekennzeichnet, dass** die programmierte Abstiegsgeschwindigkeit der Stärke des Stroms für den Anlassimpuls (40) das schnellstmögliche Absteigen ergibt.

7. Betriebsverfahren nach einem der vorhergehenden Ansprüche, **dadurch gekennzeichnet, dass** die mittlere Dauer des Stromimpulses (40) zwischen dem Anfang des Stärkenanstiegs und dem Ende des Absteigens dieser Stärke zwischen 5 und 50 % der Gesamtperiode eines Zyklus liegt.

8. Betriebsverfahren nach einem der vorhergehenden Ansprüche, **dadurch gekennzeichnet, dass** die Gesamtdauer eines Zyklus zwischen 10 und 200 Sekunden liegt.

9. Brennstoffzelle, die ein Betriebsverfahren nach einem der vorhergehenden Ansprüche umsetzt, **dadurch gekennzeichnet, dass** sie einen Sensor (16) zum Messen von Spannung an den Klemmen der Zellen umfasst, und einen Sensor (18) zum Messen der Stärke des abgegebenen Stroms.

10. Elektrischer Generator, der über eine Brennstoffzelle (2) verfügt, die von einem Betriebsverfahren gesteuert wird, **dadurch gekennzeichnet, dass** das Verfahren nach einem der Ansprüche 1 bis 8 ausgeführt wird.

11. Elektrofahrzeug, das eine Brennstoffzelle (2) umfasst, die einen elektrischen Strom liefert, der zur Traktion verwendet wird, **dadurch gekennzeichnet, dass** diese Brennstoffzelle von einem Betriebsverfahren gesteuert wird, das nach einem der Ansprüche 1 bis 8 ausgeführt wird.

## Claims

1. A method for operating a fuel cell (2), implemented by a control computer (10) which drives the level of current generated by the cells of the fuel cell, this fuel cell including a means for tracking the temperature of the cells, **characterized in that** it comprises the following steps when starting the operation of the fuel cell if the temperature of the cells is less than or equal to 3°C, it drives successions of cycles of intervals (40) including for each cycle alternately a low non-zero current (Imin), then a current interval (40) comprising raising and lowering the intensity of the current at programmed speeds.

2. The operating method according to the preceding claim, **characterized in that** the low current (Imin) is constant.

3. The operating method according to one of the preceding claims, **characterized in that** the interval (40) comprises a maintaining at a maximum intensity (Imax), which is constant.

4. The operating method according to Claim 3, **characterized in that** the maximum intensity (Imax) corresponds to a value greater than or equal to the intensity value for which the electric power (Pe) produced is at a maximum.

5. The operating method according to any one of the preceding claims, **characterized in that** the programmed speed of raising the intensity of the current for the interval (40) is comprised between 0.1 and 10 A/cm²/s, without the voltage of a cell falling below 0.3 V.

6. The operating method according to any one of the preceding claims, **characterized in that** the programmed speed of the drop in intensity of the current for the interval (40) gives the fastest possible drop.

7. The operating method according to any one of the preceding claims, **characterized in that** the average duration of the current interval (40) between the start of the rise in intensity and the end of the drop in this intensity is comprised between 5 and 50% of the total period of a cycle.

8. The operating method according to any one of the preceding claims, **characterized in that** the total duration of a cycle is comprised between 10 and 200 seconds.

9. A fuel cell, implementing an operating method according to any one of the preceding claims, **characterized in that** it comprises a voltage measuring sensor (16) at the terminals of the cells, and a sensor (18) for measuring the intensity of the current delivered.

10. An electric generator having a fuel cell (2) driven by an operating method, **characterized in that** this method is realized according to any one of Claims 1 to 8.

11. An electric vehicle including a fuel cell (2) delivering an electric current used for traction, **characterized in that** this fuel cell is driven by an operating method realized according to any one of Claims 1 to 8.
